# EUROPÄISCHE PATENTSCHRIFT

(11) **EP 1 058 764 B1**
(45) Veröffentlichungstag und Bekanntmachung des Hinweises auf die Patenterteilung: **12.12.2001**
(21) Anmeldenummer: 99906195.5
(22) Anmeldetag: 22.01.1999
(51) Int. Cl.: E05B 47/00

(54) **VERSCHLUSS FÜR EINE SCHALTSCHRANKTÜR, MASCHINENVERKLEIDUNG ODER DGL.**
CLOSING DEVICE FOR A CONTROL CABINET DOOR, MACHINE CASING OR SUCH LIKE
DISPOSITIF DE FERMETURE POUR PORTE D'ARMOIRE DE COMMANDE, HABILLAGE DE MACHINE OU SIMILAIRE

(30) Priorität: 27.02.1998 DE 19808270
(43) Veröffentlichungstag der Anmeldung: 13.12.2000
(73) Patentinhaber: Rittal-Werk Rudolf Loh GmbH & Co. KG, 35745 Herborn (DE)
(72) Erfinder: THIELMANN, Bodo, D-35745 Merkenbach (DE); KÜSTER, Frank, D-35767 Breitscheid (DE)
(74) Vertreter: Fleck, Hermann-Josef, Dr.-Ing.
(86) Internationale Anmeldenummer: EP9900432
(87) Internationale Veröffentlichungsnummer: WO9943914

(56) Entgegenhaltungen:
- WO-A-89/02967
- DE-A- 19 613 196
- DE-U- 9 402 208
- DE-U- 29 507 654
- US-A- 4 529 234
- PATENT ABSTRACTS OF JAPAN vol. 097, no. 009, 30. September 1997 & JP 09 125764 A (MIWA LOCK CO LTD), 13. Mai 1997
- PATENT ABSTRACTS OF JAPAN vol. 013, no. 514 (M-894), 17. November 1989 & JP 01 207580 A (NISHI SEISAKUSHO:KK), 21. August 1989

## Beschreibung

Die Erfindung betrifft einen Verschluß für eine Schaltschranktür, Maschinenverkleidung oder dgl. mit einer Sicherheitseinrichtung gemäß Oberbegriff des Anspruchs 1.

Ein derartiger Verschluß ist aus Sicherheitsgründen dort eingesetzt, wo bestimmte Voraussetzungen für das Freigeben des Öffnungsvorganges der Schaltschranktür oder Maschinenverkleidung, z.B. die Abschaltung der Versorgungsspannung und dgl., zu beachten sind.

Ein derartiger Verschluß ist aus der WO 89/02 967 bekannt. Dabei ist ein sogenannter Schwenkhebel-Verschluß eingesetzt und die Verriegelung erfolgt über den Schwenkhebel, der dazu in seine Ausgangsstellung in einer Schloßmulde gebracht werden muß. Dies bedingt einen erheblichen Eingriff in den Verschluß mit sich, d.h. eine wesentliche Änderung des Schloßmechanismus.

Es ist Aufgabe der Erfindung, einen Verschluß der eingangs erwähnten Art zu schaffen, der auf wesentlich einfachere Weise eine Verriegelung in der Schließstellung erlaubt.

Diese Aufgabe wird nach der Erfindung durch die Merkmale des Anspruchs 1 gelöst.

Dabei wird davon ausgegangen, daß alle herkömmlichen Schlösser einen in Drehbewegung versetzbaren Schioßmechanismus aufweisen. Mit dem verstellbaren Verriegelungsglied im Schloß, das nur mit dem in Drehbewegungen versetzbaren Schloßmechanismus zusammenwirken muß, kann mit Hilfe eines elektrisch gesteuerten Auslösegliedes vom Schaltschrank oder von der Maschine aus die Ver- und Entriegelung des Schlosses gesteuert werden. Dieser Ver- und Entriegelungsmechanismus ist auf alle Schloßarten übertragbar, ohne den eigentlichen Schließmechanismus wesentlich abändern zu müssen.

Die Wirkverbindung zwischen Verriegelungsglied und Auslöseglied wird dadurch auf einfache Art realisierbar, daß das Verriegelungsglied auf der dem Türrahmen oder Maschinengestellrahmen zugekehrten Seite über einen Durchbruch des Schloßgehäuses zugänglich und in diesem Durchbruch verstellbar geführt ist und daß eine Druckfeder das mit Anschlägen versehene Verriegelungsglied in der Verriegelungsstellung im Durchbruch festhält.

Die Ausgestaltung des Verschlusses sieht weiterhin vor, daß das Verriegelungsglied mit einer Kurvenscheibe des Schließmechanismus zusammenwirkt, die eine Abflachung zum Abstützen auf dem Verriegelungsglied und Einhaltung der Verriegelungsstellung aufweist, und daß die Kurvenscheibe außerhalb der Abflachung den Durchbruch teilweise überdeckt und das in die Entriegelungsstellung eingestellte Verriegelungsglied in dieser Stellung festhält, um zwischen Verriegelungsteil und Schließmechanismus die erforderliche Wirkverbindung zu erhalten. Der Schloßmechanismus umfaßt dabei ein Schloßbetätigungselement, ein Ritzel für ein Schubstangenpaar zur Verbesserung der Schließstellung, die Kurvenscheibe und einen Vorreiber, die alle drehfest miteinander verbunden sind. Der Vorreiber nimmt an dem Schließvorgang der Schaltschranktür oder Maschinenverkleidung teil.

Für die Verstellung des Auslösegliedes ist nach einer Ausgestaltung vorgesehen, daß der Elektromagnet auf einer am Türrahmen oder Maschinengestellrahmen befestigten Konsole angebracht ist und eine Anzugsplatte mit Verstellstange steuert, daß die Verstellstange durch Durchbrüche von Systemlochreihen des Türrahmens oder Maschinengestellrahmens geführt ist und daß das aus dem Türrahmen oder Maschinengestellrahmen ragende Ende der Verstellstange das Auslöseglied trägt. Die Anzugsplatte ist dabei mittels Führungsbolzen in Durchbrüchen des Türrahmens oder Maschinengestellrahmens unverdrehbar geführt. Dies gilt dann auch für die Verstellstange mit dem Auslöseglied, so daß dieses stets in derselben Stellung mit dem Verriegelungsglied im Schloß zusammenwirken kann.

Die Steuerung des Ver- und Entriegelungsmechanismus kann zum einen so ausgelegt sein, daß bei erregtem Elektromagneten das Auslöseglied beim Schließen der Schaltschranktür oder Maschinenverkleidung das Verriegelungsglied des Schlosses in die Entriegelungsstellung bringt und daß nach dem Einstellen des Schlosses in die Schließstellung und abgeschaltetem Elektromagneten die Druckfeder im Schloß das Verriegelungsglied in die Verriegelungsstellung einstellt. Eine andere Variante ist dadurch gekennzeichnet, daß bei nicht erregtem Elektromagneten eine Druckfeder das Auslöseglied in der Entriegelungsstellung hält, daß beim Schließen der Schaltschranktür oder Maschinenverkleidung das Verriegelungsglied im Schloß in der Entriegelungsstellung gehalten bleibt und daß nach dem Einstellen des Schlosses in die Schließstellung und erregtem Elektromagneten die Druckfeder im Schloß das Verriegelungsglied in die Verriegelungsstellung einstellt.

Die Erfindung wird anhand eines in den Zeichnungen dargestellten Ausführungsbeispiels näher erläutert. Es zeigen:
- Fig. 1: in Explosionsdarstellung ein für den Verschluß eingesetztes Schloß mit Verriegelungsglied und
- Fig. 2: am Beispiel eines Schaltschrankes den mit dem Verschluß realisierbaren Ver- und Entriegelungsvorgang.

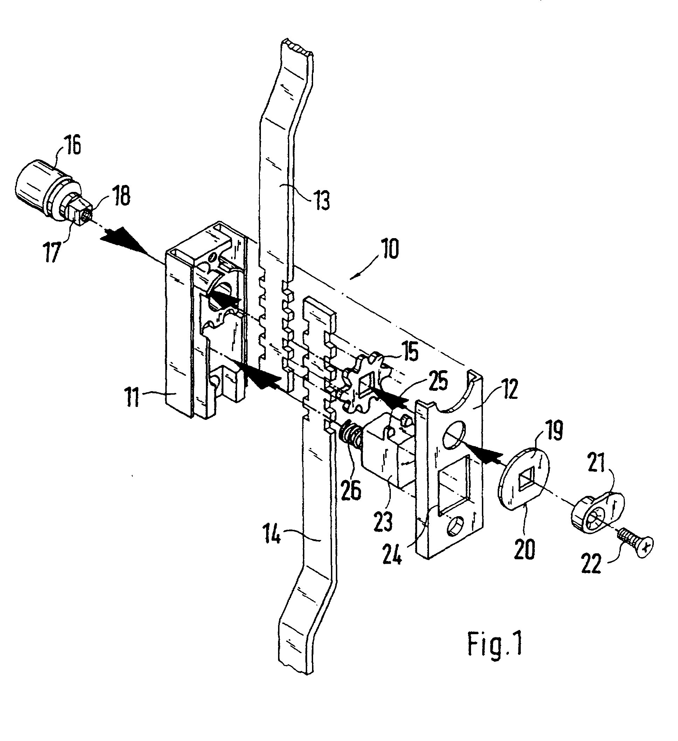

In Fig. 1 ist ein Schloß 10 gezeigt, das mit einem Verriegelungsglied 23 ausgerüstet ist, mit dem nach dem Schließvorgang das Schloß 10 verriegelt werden kann. Im Ausführungsbeispiel ist das Schloß 10 als Schubstangenschloß ausgebildet, dessen Schloßmechanismus ein Schloßbetätigungselement 16, ein Ritzel 15 zum Verstellen der Schubstangen 13 und 14 und einen Vorreiber 21 umfaßt. Dabei wird der Schloßmechanismus in dem aus den Gehäuseteilen 11 und 12 zusammensetzbaren Schloßgehäuse drehbar gelagert. Ein Vierkantansatz 17 des Schloßbetätigungselementes 16 nimmt das Ritzel 15 unverdrehbar auf und wird vor dem Anbringen des Vorreibers 21 auf dem aus dem Gehäuseteil 12 ragenden Vierkantansatz 17 mit der Kurvenscheibe 19 versehen. Der Vorreiber 21 wird mit der Schraube 22 mit der Gewindeaufnahme 18 im Vierkantansatz 17 des Schloßbetätigungselementes 16 verschraubt. Dabei wird der Schloßmechanismus gleichzeitig am Schloßgehäuse festgelegt und drehbar gelagert. Das Schloß 10 kann unterschiedlich aufgebaut sein, was insbesondere das Schloßbetätigungselement 16 betrifft. Allen Schlössern ist jedoch gemeinsam, daß ein in beiden Drehrichtungen verstellbares Teil vorhanden ist, das in den Drehrichtungen blockier- und freigebbar ist.

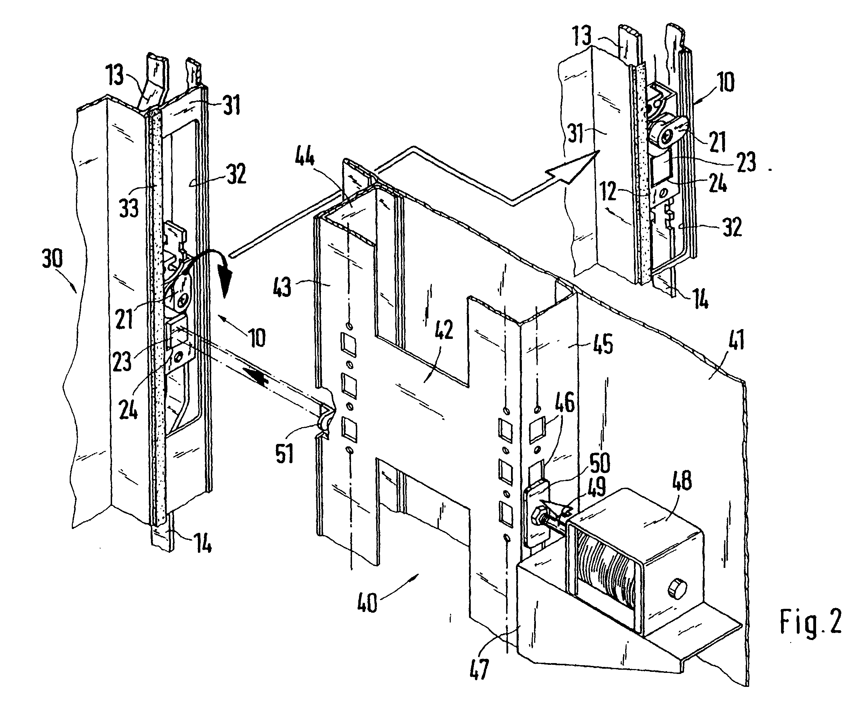

Das Schloßgehäuse nimmt ein Verriegelungsglied 23 auf, das sich über eine Druckfeder 26 im Schloßgehäuse so abstützt, daß es aus einem Durchbruch 24 im Gehäuseteil 12, das dem Türrahmen 42 oder Maschinengestellrahmen nach Fig. 2 zugekehrt ist, zum Teil herausragt. Diese Stellung des Verriegelungsglieds 23 wird als Verriegelungsstellung ausgenützt, in der der Schloßmechanismus so eingestellt ist, daß die Abflachung 20 der Kurvenscheibe 19 auf dem Verriegelungsglied 23 steht und die Anschläge (Nocken) 25 des freigegebenen Verriegelungsgliedes 23 in das Zahnrad eingreifen und den Schließmechanismus an einem Verdrehen verhindert. In der Verriegelungsstellung liegen Anschläge 25 des Verriegelungsgliedes 23 an der Innenseite des Gehäuseteils 12 an.

Zur Entriegelung muß das Verriegelungsglied 23 so weit in das Schloßgehäuse hinein verstellt werden, daß sich die Kurvenscheibe 19 mit den Bereichen außerhalb der Abflachung 20 vor den Durchbruch 24 legen und das Verriegelungsglied 23 in der Entriegelungsstellung halten kann.

Wie Fig. 2 zeigt, ist das Schloß 10 in ein Rahmenprofil 31 der Schaltschranktür 30 oder Maschinenverkleidung eingebaut. Das Rahmenprofil 31 kann ein aufgebrachter Rahmenschenkel sein oder an der Schaltschranktür oder Maschinenverkleidung abgekantet sein. Die dem Türrahmen 42 oder Maschinengestellrahmen zugekehrte Seite des Rahmenprofils 31 weist ein Durchbruch 32 zum Einbau des Schlosses 10 auf, in dem das Verriegelungsglied 23 und der Vorreiber 21 zugänglich sind. Der Vorreiber 21 kann für den Schließvorgang mitverwendet werden, so daß mit den beiden Schubstangen 13 und 14 mindestens drei Schließstellen erhalten werden. Ein Dichtungselement 33 am Rahmenprofil 31 kann die Abdichtung übernehmen.

Der Türrahmen 42 des Schaltschrankes 40 ist an einer Seitenwand 41 befestigt und weist in den Seiten 43, 44 und 45 Systemlochreihen mit Durchbrüchen 46 auf. Auf einer Konsole 47 ist ein Elektromagnet 48 befestigt, die mit dem Türrahmen 42 oder Maschinengestellrahmen verschraubt ist. Der Elektromagnet 48 verstellt eine Verstellstange 49, die eine Auszugsplatte 50 als Polplatte trägt. Die Verstellstange 49 ist durch Durchbrüche 46 in den Seiten 44 und 45 des Türrahmens 42 geführt und ist am Ende mit einem Auslöseglied 51 verbunden. Mit dem Auslöseglied 51 kann beim Schließen der Schaltschranktür 30 das Verriegelungsglied 23 im Schloß 10 in die Entriegelungsstellung verschoben werden, so daß der Schloßmechanismus in die Schließstellung verdreht werden kann. Gibt das Auslöseglied 51 das Verriegeiungsglied 23 frei, in dem es in Richtung zum Türrahmen 42 oder Maschinengestellrahmen zurückbewegt wird, dann stellt die Druckfeder 26 im Schloß 10 das Verriegelungsglied 23 in die Verriegelungsstellung ein, wobei die Kurvenscheibe 19 sich mit der Abflachung 20 auf dem teilweise aus dem Durchbruch 24 ragenden Teil des Verriegelungsgliedes 23 abstützt und eine Drehbewegung des Schließmechanismus unterbindet.

Die Anzugsplatte 50 auf der Verstellstange 49 kann als Polplatte des Elektromagneten 48 dienen und ist über Führungsbolzen in Durchbrüchen des Türrahmens 42 oder Maschinengestellrahmens unverdrehbar geführt, so daß auch das Auslöseglied 51 am Ende der Verstellstange 49 stets in derselben Stellung mit dem Verriegelungsglied 23 im Schloß 10 zusammenwirkt.

Die Steuerung des Elektromagneten 48 kann einmal so ausgelegt sein, daß das Auslöseglied 51 beim Schließen der Schaltschranktür 30 oder Maschinenverkleidung des Verriegelungsglied 23 des Schlosses 10 in die Entriegelungsstellung bringt. Nach dem Einstellen des Schlosses 10 in die Schließstellung wird bei abgeschalteter Erregung des Elektromagneten 48 die Druckfeder 26 im Schloß 10 das Verriegelungsglied 23 in die Verriegelungsstellung einstellen.

Die Steuerung des Elektromagneten 48 kann jedoch auch so ausgeführt werden, daß bei nicht erregtem Elektromagneten 48 eine Druckfeder das Auslöseglied 51 in der Entriegelungsstellung hält. Beim Schließen der Schaltschranktür 30 oder Maschinenverkleidung wird das Verriegelungsglied 23 im Schloß dann in der Entriegelungsstellung verbleiben. Nach dem Einschalten der Erregung des Elektromagneten 48 stellt die Druckfeder 26 im Schloß 10 das Verriegelungsglied 23 in die Verriegelungsstellung.

## Patentansprüche

1. Verschluß für eine Schaltschranktür (30), Maschinenverkleidung oder dgl. mit einer Sicherheitseinrichtung, bestehend aus einem an der Schaltschranktür (30), Maschinenverkleidung oder dgl. angebrachten Schloß (10) mit einem ersten Verriegelungsteil und einem am Türrahmen (42), Maschinengestellrahmen oder dgl. befestigten zweiten Verriegelungsteil, wobei beide Verriegelungsteile unter Steuerung eines elektrischen Signals miteinander in Wirkverbindung und wieder außer Wirkverbindung bringbar sind, wobei ein Schloß (10) mit in unterschiedliche Drehrichtung versetzbarem Schließmechanismus (16, 15, 19, 13) verwendet ist, in dem ein unter Federspannung stehendes Verriegelungsglied (23) verstellbar geführt ist, wobei das Verriegelungsglied (23) unter der Federspannung in einer Verriegelungsstellung die Drehbewegung des Schloßmechanismus (16, 15, 19, 13) blockiert und wobei mit einem am Türrahmen (42) oder Maschinengestellrahmen angebrachten Elektromagneten (48) ein Auslöseglied (51) verstellbar ist, mit dem das Verriegelungsglied (23) im Schloß (10) in eine die Drehbewegung des Schloßmechanismus (16, 15, 19, 13) freigebende Entriegelungsstellung einstellbar ist,
**dadurch gekennzeichnet,**
**dass** das Schloss (10) als Schubstangenschloss ausgebildet ist, dessen Schlossmechanismus ein Schlossbetätigungselement (16) und ein Ritzel (15) zum Verstellen von zwei Schubstangen (13 und 14) umfasst, und
**dass** in der, das Verdrehen des Schliessmechanismusses verhindernden Verriegelungsstellung das Verriegelungsglied (23) mit Anschlägen (25) in das Ritzel (15) eingreift.

2. Verschluß nach Anspruch 1,
**dadurch gekennzeichnet,**
**daß** das Verriegelungsglied (23) auf der dem Türrahmen (42) oder Maschinengestellrahmen zugekehrten Seite über einen Durchbruch (24) des Schloßgehäuses (11, 12) zugänglich und in diesen Durchbruch (24) verstellbar geführt ist und
**daß** eine Druckfeder (26) das mit Anschlägen (25) versehene Verriegelungsglied (23) in der Verriegelungsstellung im Durchbruch (24) festhält.

3. Verschluß nach Anspruch 1 oder 2,
**dadurch gekennzeichnet,**
**daß** das Verriegelungsglied (23) mit einer Kurvenscheibe (19) des Schloßmechanismus zusammenwirkt, die eine Abflachung (20) zum Abstützen auf dem Verriegelungsglied (23) und Einhaltung der Verriegelungsstellung aufweist, und
**daß** die Kurvenscheibe (19) außerhalb der Abflachung (20) den Durchbruch (24) teilweise überdeckt und das in die Entriegelungsstellung eingestellte Verriegelungsglied (23) in dieser Stellung festhält.

4. Verschluß nach einem der Ansprüche 1 bis 3,
**dadurch gekennzeichnet,**
**daß** der Schloßmechanismus ein Schloßbetätigungselement (16), ein Ritzel (15) für ein Schubstangenpaar (13, 14), die Kurvenscheibe (19) und einen Vorreiber (21) umfaßt, die alle drehfest miteinander verbunden sind.

5. Verschluß nach einem der Ansprüche 1 bis 4,
**dadurch gekennzeichnet,**
**daß** der Elektromagnet (48) auf einer am Türrahmen (42) oder Maschinengestellrahmen befestigten Konsole (47) angebracht ist und eine Anzugsplatte (50) mit Verstellstange 149) steuert,
**daß** die Verstellstange (49) durch Durchbrüche (46) von Systemlochreihen des Türrahmens (42) Maschinengestellrahmens geführt ist und
**daß** das aus dem Türrahmen (42) oder Maschinengestellrahmen ragende Ende der Verstellstange (49) das Auslöseglied (51) trägt.

6. Verschluß nach Anspruch 5,
**dadurch gekennzeichnet,**
**daß** die Anzugsplatte (50) mittels Führungsbolzen in Durchbrüchen des Türrahmens (42) oder Maschinengestellrahmens und damit die Verstellstange (49) mit dem Auslöseglied (51) unverdrehbar geführt ist.

7. Verschluß nach einem der Ansprüche 1 bis 6,
**dadurch gekennzeichnet,**
**daß** bei erregtem Elektromagneten (48) das Auslöseglied (51) beim Schließen der Schaltschranktür (30) oder Maschinenverkleidung das Verriegelungsglied (23) des Schlosses (10) in die Entriegelungsstellung bringt und
**daß** nach dem Einstellen des Schlosses (10) in die Schließstellung und abgeschaltetem Elektromagneten (48) die Druckfeder (26) im Schloß (10) das Verriegelungsglied (23) in die Verriegelungsstellung einstellt.

8. Verschluß nach einem der Ansprüche 1 bis 6,
**dadurch gekennzeichnet,**
**daß** bei nicht erregtem Elektromagneten (48) eine Druckfeder das Auslöseglied (51) in der Entriegelungsstellung hält,
**daß** beim Schließen der Schaltschranktür (30) oder Maschinenverkleidung das Verriegelungsglied (23) im Schloß (10) in der Entriegelungsstellung gehalten bleibt und
**daß** nach dem Einstellen des Schlosses (10) in die Schließstellung und erregtem Elektromagneten (48) die Druckfeder (26) im Schloß (10) das Verriegelungsglied (23) in die Verriegelungsstellung einstellt.

## Claims

1. Closure for a switch-cabinet door (30), machine casing or the like with a safety device, comprising a lock (10) which is fitted on the switch-cabinet door (30), machine casing or the like and has a first locking part and a second locking part fastened on the door frame (42), machine framework or the like, it being the case that the two locking parts, with electrical-signal control, can be moved into operative connection with one another and moved out of operative connection again, it being the case that use is made of a lock (10) with a locking mechanism (16, 15, 19, 13) which can be moved in different directions of rotation, a locking member (23) which is subjected to spring stressing being guided in an adjustable manner therein, it being the case that the locking member (23) under the spring stressing, in a locking position, blocks the rotary movement of the lock mechanism (16, 15, 19, 13), and it being the case that, using an electromagnet (48) fitted on the door frame (42) or machine framework, it is possible to adjust a release member (51), by means of which the locking member (23) in the lock (10) can be adjusted into an unlocking position, in which the rotary movement of the lock mechanism (16, 15, 19, 13) is released, **characterized in that** the lock (10) is designed as a push-rod lock, of which the lock mechanism comprises a lock-actuating element (16) and a pinion (15) for adjusting two push rods (13 and 14), and **in that** in the locking position, in which rotation of the locking mechanism is prevented, the locking member (23), engages in the pinion (15) by way of stops (25).

2. Closure according to Claim 1, **characterized in that** the locking member (23), on the side which is directed towards the door frame (42) or machine framework, is accessible via a through-passage (24) of the lock housing (11, 12) and is guided in an adjustable manner into said through-passage (24), and **in that** a compression spring (26) secures the locking member (23), provided with stops (25), in the locking position in the through-passage (24).

3. Closure according to Claim 1 or 2, **characterized in that** the locking member (23) interacts with a cam plate (19) of the lock mechanism, said cam plate having a flattened portion (20) for supporting on the locking member (23) and maintaining the locking position, and **in that** the cam plate (19), outside the flattened portion (20), partially overlaps the through-passage (24) and, once the locking member (23) has been adjusted into the unlocking position, secures the locking member in this position.

4. Closure according to one of Claims 1 to 3, **characterized in that** the lock mechanism comprises a lock-actuating element (16), a pinion (15) for a pair of push rods (13, 14), the cam plate (19) and a fastener (21), which are all connected to one another in a rotationally fixed manner.

5. Closure according to one of Claims 1 to 4, **characterized in that** the electromagnet (48) is fitted on a bracket (47), fastened on the door frame (42) or machine framework, and controls an attraction plate (50) with adjusting rod (49), **in that** the adjusting rod (49) is guided through through-passages (46) of rows of system holes of the door frame (42) or machine framework, and **in that** that end of the adjusting rod (49) which projects out of the door frame (42) or machine framework bears the release member (51).

6. Closure according to Claim 5, **characterized in that** the attraction plate (50) is guided in a non-rotatable manner in through-passages of the door frame (42) or machine framework by means of guide bolts, and the adjusting rod (49) with the release member (51) is thus also guided in a non-rotatable manner.

7. Closure according to one of Claims 1 to 6, **characterized in that**, with the electromagnet (48) in an excited state, the release member (51) moves the locking member (23) of the lock (10) into the unlocking position during closure of the switch-cabinet door (30) or machine casing, and **in that**, once the lock (10) has been adjusted into the locking position and the electromagnet (48) has been switched off, the compression spring (26) in the lock (10) adjusts the locking member (23) into the locking position.

8. Closure according to one of Claims 1 to 6, **characterized in that**, when the electromagnet (48) is not in an excited state, a compression spring keeps the release member (51) in the unlocking position, **in that** the locking member (23) in the lock (10) remains in the unlocking position during closure of the switch-cabinet door (30) or machine casing, and **in that**, once the lock (10) has been adjusted into the locking position and the electromagnet (48) has been excited, the compression spring (26) in the lock (10) adjusts the locking member (23) into the locking position.

## Revendications

1. Dispositif de fermeture pour une porte d'armoire de commande (30), un habillage de machine ou similaire avec un dispositif de sécurité, se composant d'une serrure (10) montée sur la porte d'armoire de commande (30), l'habillage de machine ou similaire, avec une première pièce de verrouillage et une deuxième pièce de verrouillage fixée au cadre de porte (42), au châssis de machine ou similaire, dans lequel les deux pièces de verrouillage peuvent être engagées activement l'une avec l'autre et à nouveau dégagées l'une de l'autre sous la commande d'un signal électrique, dans lequel on utilise une serrure (10) avec un mécanisme de fermeture (16, 15, 19, 13) déplaçable dans un sens de rotation différent et dans lequel un organe de verrouillage (23) soumis à la tension d'un ressort est guidé de façon mobile, dans lequel l'organe de verrouillage (23) sous la tension du ressort bloque, dans une position de verrouillage, le mouvement de rotation du mécanisme de la serrure (16, 15, 19, 13) et dans lequel un organe de libération (51) est mobile avec un électroaimant (48) installé sur le cadre de porte (42) ou le châssis de machine, avec lequel l'organe de verrouillage (23) dans la serrure (10) peut être amené dans une position de déverrouillage libérant le mouvement de rotation du mécanisme de la serrure (16, 15, 19, 13), **caractérisé en ce que** la serrure (10) est une serrure à crémaillères, dont le mécanisme de serrure comprend un élément de manoeuvre de la serrure (16) et un pignon (15) pour le déplacement de deux crémaillères (13 et 14), et **en ce que**, dans la position de verrouillage empêchant la rotation du mécanisme de fermeture, l'organe de verrouillage (23) est en prise avec des butées (25) sur le pignon (15).

2. Dispositif de fermeture suivant la revendication 1, **caractérisé en ce que** l'organe de verrouillage (23) sur le côté tourné vers le cadre de porte (42) ou le châssis de machine est accessible par une ouverture (24) du coffre de serrure (11, 12) et est guidé de façon mobile dans cette ouverture (24), et **en ce qu'**un ressort de pression (26) maintient l'organe de verrouillage (23) pourvu de butées (25) en position de verrouillage dans l'ouverture (24).

3. Dispositif de fermeture suivant la revendication 1 ou 2, **caractérisé en ce que** l'organe de verrouillage (23) coopère avec une came (19) du mécanisme de serrure, qui présente un méplat (20) servant de support sur l'organe de verrouillage (23) et maintenant la position de verrouillage, et **en ce que** la came (19) recouvre partiellement l'ouverture (24) à l'extérieur du méplat (20) et maintient dans la position de déverrouillage l'organe de verrouillage (23) amené dans cette position.

4. Dispositif de fermeture suivant l'une quelconque des revendications 1 à 3, **caractérisé en ce que** le mécanisme de serrure comprend un élément de manoeuvre de la serrure (16), un pignon (15) pour une paire de crémaillères (13, 14), la came (19) et un tourniquet (21), qui sont tous calés en rotation les uns par rapport aux autres.

5. Dispositif de fermeture suivant l'une quelconque des revendications 1 à 4, **caractérisé en ce que** l'électroaimant (48) est installé sur une console (47) fixée au cadre de porte (42) ou au châssis de machine, et commande une plaque de traction (50) avec une tige de réglage (49), **en ce que** la tige de réglage (49) est menée à travers des ouvertures (46) de rangées de trous du système du cadre de porte (42) ou du châssis de machine et **en ce que** l'extrémité de la tige de réglage (49) sortant du cadre de porte (42) ou du châssis de machine porte l'organe de libération (51).

6. Dispositif de fermeture suivant la revendication 5, **caractérisé en ce que** la plaque de traction (50), et avec elle la tige de réglage (49) avec l'organe de libération (51), est guidée sans rotation au moyen de boulons de guidage dans des ouvertures du cadre de porte (42) ou du châssis de machine.

7. Dispositif de fermeture suivant l'une quelconque des revendications 1 à 6, **caractérisé en ce que**, lorsque l'électroaimant (48) est excité, l'organe de libération (51) amène l'organe de verrouillage (23) de la serrure (10) dans la position de déverrouillage lors de la fermeture de la porte (30) de l'armoire de commande ou de l'habillage de machine, et **en ce qu'**après le déplacement de la serrure (10) dans la position de fermeture et la coupure de l'électroaimant (48), le ressort de pression (26) dans la serrure (10) déplace l'organe de verrouillage (23) dans la position de verrouillage.

8. Dispositif de fermeture suivant l'une quelconque des revendications 1 à 6, **caractérisé en ce que**, lorsque l'électroaimant (48) n'est pas excité, un ressort de pression maintient l'organe de libération (51) dans la position de déverrouillage, **en ce que**, lors de la fermeture de la porte (30) de l'armoire de commande ou de l'habillage de machine, l'organe de verrouillage (23) dans la serrure (10) est maintenu dans la position de déverrouillage, et **en ce qu'**après le déplacement de la serrure (10) dans la position de fermeture et avec l'électroaimant (48) excité, le ressort de pression (26) dans la serrure (10) déplace l'organe de verrouillage (23) dans la position de verrouillage.
